# EUROPEAN PATENT APPLICATION

(11) **EP 1 607 563 A1**
(43) Date of publication of application: **21.12.2005**
(21) Application number: 04012692.2
(22) Date of filing: 28.05.2004
(51) Int. Cl.: E05F 15/10, E05F 15/16

(54) **Drive unit and method for temperature regulation of the transmission in a building door arrangement**

(71) Applicant: CARDO DOOR AB, S-201 21 Malmö (SE)
(72) Inventor: Jeppsson, Olof, 224 76 Lund (SE)
(74) Representative: Kraenzmer, Martin

(57) **Abstract**

Method for enabling temperature regulation of a transmission lubricant for a motorized building door arrangement having
at least one door section (3,3',3'') which is moveable between a closed position and an open position, and vice versa,
an electric motor (8) mechanically connected to a lubricated transmission (4) for achieving a movement of said door section (3,3',3'') and
a control unit (24) adapted to control said motor (8)
comprising the steps of
initiating a predetermined start input frequency and a selectable start current amplitude to said motor (8),
detecting a friction property for determining a present requirement for temperature regulation,
based on said friction property, adjusting said current amplitude effectuating temperature regulation of said transmission lubricant.

The invention also relates to a drive unit for a building door arrangement and the use of the drive unit in a building door arrangement.

## Description

### Technical Field of Invention

The present invention relates to a method for enabling temperature regulation of a transmission lubricant for a motorized building door arrangement having at least one door section which is moveable between a closed position and an open position, and vice versa, an electric motor mechanically connected to a lubricated transmission for achieving a movement of said door section and a control unit adapted to control said motor. The invention also relates to a drive unit for a building door arrangement and the use of the drive unit in a building door arrangement.

### Technical Background

A motorized building door arrangement of the kind described in the introduction is previously known in the art. Building doors include a number of different types of designs such as overhead doors, horizontal sliding doors, vertical lift doors, folding doors, roller doors etc. Drive units which is adapted to building doors of this kind usually comprises a motor and a control unit which controls the operation of the door via a lubricated transmission in order to achieve an opening or a closing movement of the door. The drive unit can be installed in a troublesome environment and be subjected to difficult conditions. One issue with such drive units with a lubricated transmission relates to when the lubricated transmission has a low temperature causing a higher resistance motion and friction of the drive unit, especially in the lubricated transmission.

Another issue relates to the need of effectuating substantially equivalent operational conditions for the drive unit despite of, for example, a initial low temperature which increases during operation.

To overcome the problem of a high resistance motion of the lubricated transmission when subjected to a low temperature the transmission of prior art door arrangements can be arranged with external heating coils. However these heating coils generally do not achieve a uniform heating and there is a risk that adjacent components will be damaged and/or cause malfunction when subjected to the heating of the external heating coils.

Thus, there is a need to achieve a drive unit for building door arrangements and a method thereof with a high function accuracy of the drive unit and the building door arrangement as a whole. Further it is desired to achieve required operational conditions and to reduce the risk of malfunctioning. Finally it would be advantageous to provide a robust, cost effective and safe high-quality drive unit for a building door and their functioning thereof.

### Summary of the invention

The object of the invention is to provide a method for temperature regulation of a transmission lubricant for a motorized building door arrangement enabling improvement with regard to prior art arrangements in one or more of the above mentioned aspects.

These and other objects are achieved by a method according to claim 1, the drive unit for a building door arrangement according to claim 9 and the use of a drive unit arranged in a building door arrangement according to claim 15. Preferred embodiments of the invention are defined in the dependent claims.

For this purpose, according to the invention, a method is achieved for enabling temperature regulation of a transmission lubricant for a motorized building door arrangement having at least one door section which is moveable between a closed position and an open position, and vice versa, an electric motor mechanically connected to a lubricated transmission for achieving a movement of said door section and a control unit adapted to control said motor comprising the steps of
initiating a predetermined start input frequency and a selectable start current amplitude to said motor,
detecting a friction property for determining a present requirement for temperature regulation,
based on said friction property, adjusting said current amplitude effectuating temperature regulation of said transmission lubricant.

The invention as defined by claims 1, 9 and 15 offers several advantages, such as achieving an effective temperature regulation to effectuate required operational conditions. If for instance a high friction property is detected due to a low temperature, the current amplitude is increased causing an increase of heat which heat is transferred to the transmission lubricant causing a reduced friction thereof. Further in relation to prior art temperature regulation of transmission lubricants in motorized building door arrangements the temperature regulation according to the invention is more directly regulated because of the interaction of the motor and the friction property detection achieving required operational conditions. Additionally the motor and the lubricated transmission of the building door arrangement can be installed in a troublesome environment such as a cold environment because of the improved temperature according to the invention.

The term "transmission lubricant" signifies a fluid such as a liquid or a gas provided lubricant, preferably a lubricating oil adapted to be used in a transmission.

The term "detecting a friction property" signifies frictions such as a viscosity of a fluid or other detectable frictions directly or indirectly associated with the transmission and the transmission lubricant.

Preferably, said input frequency of the method according to the invention, being increased for increasing a movement velocity of said motor, when an adequately low friction property is detected. This enables a conditional and controlled temperature regulation under a smooth velocity increase for instance during a start-up mode of the building door arrangement in a cold environment.

Advantageously said current amplitude of the method according to the invention, being decreased when an adequately low friction property is detected. When decreasing the amplitude the motor will, for instance, not be subjected to an excessive work load that in turn consequently will reduce the wear risk.

The term "adequately low friction" signifies such a low friction which is adapted to the present operational conditions and the performance of the motor. The friction property is detected and compared with the adequately low friction which for instance can be of a preset value adapted to present operational conditions.

Preferably, the method according to the invention, further comprising the step of increasing said input frequency for increasing a movement velocity of said motor, while maintaining a substantially constant output momentum of a drive unit.

Advantageously the method according to the invention, further comprising the step of decreasing said current amplitude, while maintaining a substantially constant output momentum of a drive unit. Preferably said output momentum is substantially maintained constant from said motor. Hence the output momentum can be held substantially constant by adjusting the input frequency and/or the current amplitude, admitting a uniform work load. Additionally this can improve the security and the functioning aspects for the human operator and the components of the building door arrangement as a whole.

Advantageously said detecting of the friction property of the method according to the invention, is achieved by detecting a motor output frequency of said motor, determining a frequency difference of said input and said output frequency based on said frequency difference, adjusting said current amplitude effectuating temperature regulation of said transmission lubricant. Thus, the detection of the friction property and the temperature regulation can be achieved in a straightforward and controlled manner.

Preferably the method according to the invention, is achieved by using a thermal effect from a rotor of said motor due to said current amplitude for thermal transmittance of said thermal effect to said transmission lubricant. Accordingly a limited number of additional components can be used to achieve an effective temperature regulation.

According to another object of the invention, a drive unit is provided for a building door arrangement having an electric motor which is mechanically connected to a lubricated transmission, said transmission being connectable to at least one building door section for effectuating a movement thereof, and a control unit adapted to control said motor and thereby said connectable building door section characterised in that said control unit is adapted to regulate an input frequency and an input current amplitude to said motor, said drive unit comprising means for detecting a friction property of the transmission lubricant for determining present requirement for temperature regulation, means for adjusting said current amplitude of the motor and means for transmitting a thermal effect caused thereby to said transmission lubricant. Accordingly temperature regulation can easily be achieved by said drive unit for enabling required operational conditions and to reduce the risk of malfunctioning.

Suitably said control unit is adapted to adjust said current amplitude and said input frequency to said motor, while maintaining a substantially constant output momentum of said motor.

In terms of achieving a temperature regulation in a straightforward and controlled manner said means for detecting said friction property is advantageously achieved by an encoder adapted to detect a motor output frequency of said motor wherein said control unit is adapted to compare said motor output frequency and said motor input frequency, and a required adjustment of said current amplitude.

Said drive unit may comprise a thermal sensor in communication with said control unit to control at least one operational condition of said drive unit. Said thermal sensor can for instance be used to detect when the method according to the invention has to be started alternatively be stopped. A further operational condition is when said sensor is used as an feedback signal as an additional regulation signal to the control unit for the temperature regulation.

Preferably said drive unit further comprising a modulator, such as a pulse width modulator (PWM), adapted to adjust said current amplitude and said input frequency to said motor. The modulator enables a regulation of the current amplitude and the input frequency in order to achieve correct operational conditions such as a controlled output momentum of said motor alternatively said transmission. Further example of operational conditions which can be adjusted by using the modulator is a controlled velocity of the door, section such as a substantially constant door section velocity.

Preferably, said means for adjusting said current amplitude is adapted to adjust the current amplitude to a sufficient level to effectuate appropriate thermal heating of said transmission lubricant via a rotor of said motor. An adapted applied current amplitude can achieve an increase of temperature of the rotor which rotor is connected to the lubricated transmission in order to achieve a heat transfer to the lubricant. For instance the sufficient level of the current amplitude can be a preset value in relation to the present frequency for the motor adapted to the performance of the motor.

### Brief description of drawings

By way of example, embodiments of the present invention will now be described with reference to the accompanying figures of drawings in which:
Fig. 1A is a schematic perspective view of a vertical lift building door arrangement with a drive unit according to a first embodiment of the invention.
Fig. 1B is a schematic perspective view of an overhead building sliding door arrangement with the drive unit according to fig. 1A.
Fig. 1C is a schematic perspective view of a building roller door arrangement with the drive unit according to fig. 1A.
Fig. 2 is a schematic exploded view of the drive unit according to fig. 1A.
Fig. 3 is a schematic sectional view of the drive unit according to fig. 1A.

### Description of Preferred Embodiments

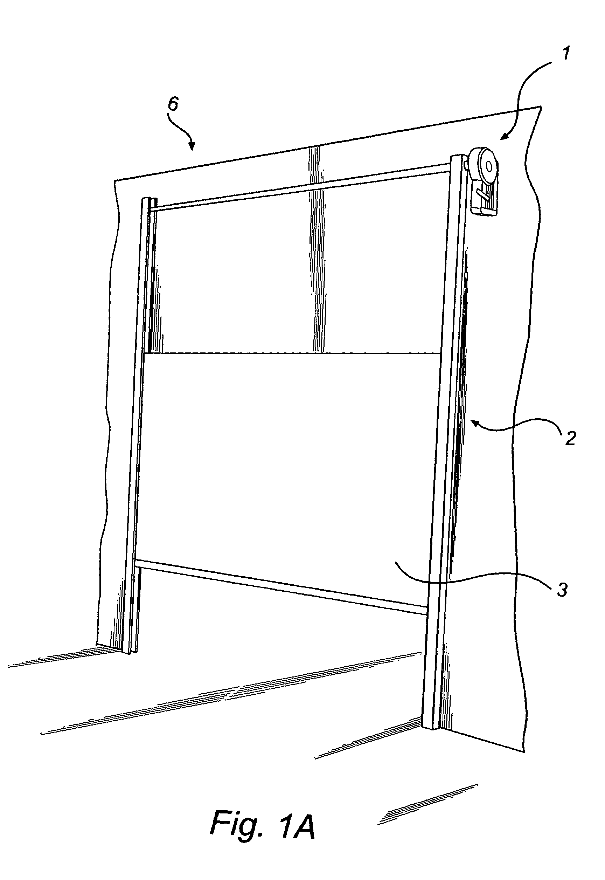

Referring now to figs. 1A-1C which shows a selection of different building door arrangements with a drive unit 1 according to a first embodiment of the invention. A building door arrangement generally comprises guide rails 2 that are arranged for guiding at least one door section 3, 3', 3" during a movement operation between a closed position and an open position, and vice versa. The movement of the door section 3, 3', 3" is normally achieved by said drive unit 1 with a transmission 4 which is connectable to the door section 3, 3', 3" via a wire 5 alternatively a belt, a gear driving or other mechanical means. The weight of the door section arrangement is generally balanced by means of a balancing spring (not shown).

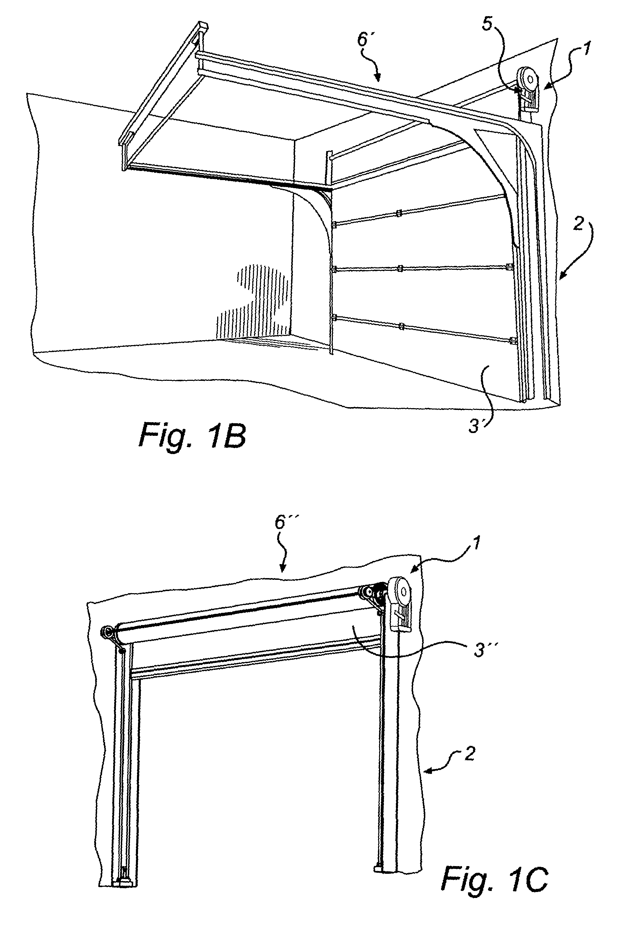

Apart from the inventive drive unit 1 the vertical lift building door 6 shown in fig. 1A is an essentially conventional vertical lift door 6, known in the art wherein a description thereof will be omitted. Correspondingly the door type shown in fig. 1B; an overhead building sliding door 6' and in fig. 1C; a building roller door 6" are also known in the art wherein a respective description thereof will be omitted.

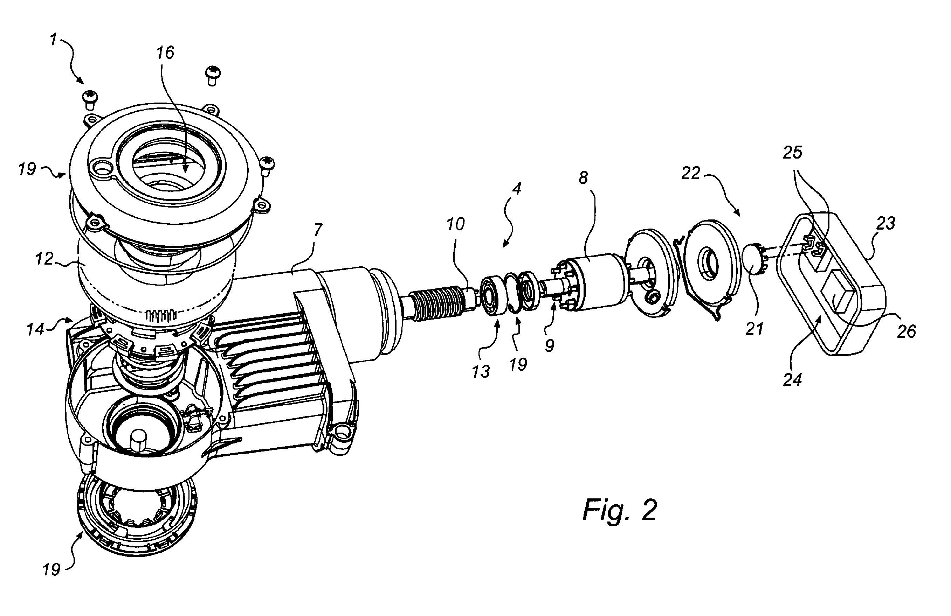

Fig. 2 illustrates a drive unit 1 according to a first embodiment of the invention with a housing 7 which is adapted to receive an alternating current motor 8, AC-motor shortened form, with a central arranged rotor 9.

An example of a three-phase induction motor is a 0,37 kW motor with product number 7AA71M04 from MEZ A.S. It goes without saying that other motors which has different performances and features can be used to fit the operational conditions.

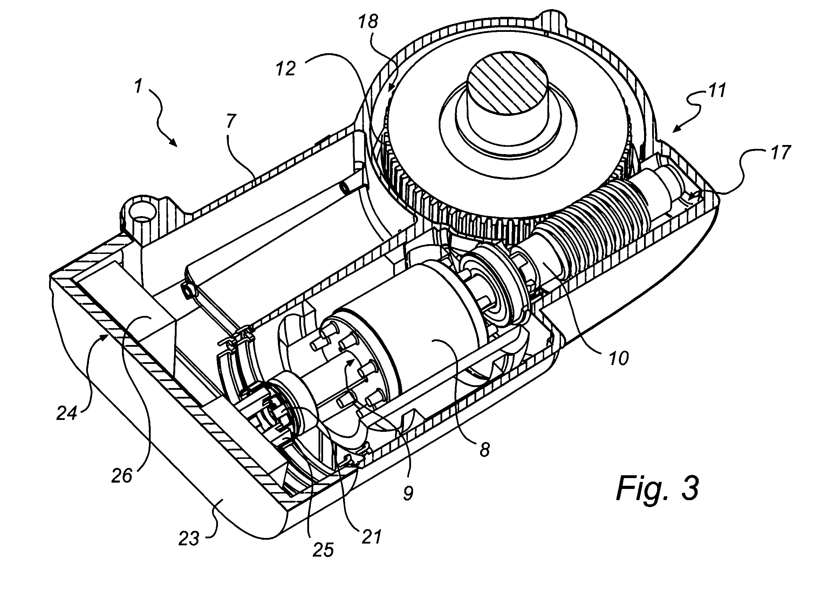

As seen in fig. 2 and fig. 3 the rotor 9 is mechanically connectable to a screw worm 10 which forms part of a worm gear 11 for transferring an axial movement of the screw worm 10 to a perpendicular arranged worm wheel 12 in said housing 7. The screw worm 10 and the worm wheel 12 are respectively supported by bearing means 13. The worm wheel 12 are further connected to means 14 in order to selectively engaging/disengaging the movement of said worm wheel 12. Said worm wheel 12 and said means 14 for engaging/disengaging has further a central through recess 16 in which a door shaft (not shown) is arrangeable. Said door shaft forming part of the door arrangement controlling the door section 3, 3' 3" via said wire 5.

The housing 7as seen in fig. 2 and 3 has an adapted elongated space 17 to accommodate the screw worm 10 and a circumferential space 18 to accommodate the worm wheel 12. Said elongated space 17 and said circumferential space together 18 forming a delimited space by sealing means 19 arranged at said housing 7. The delimited space is adapted to enclose a transmission lubricant, which in this case is a synthetic transmission oil adapted for worm gears, such as Shell Tivela©.

In fig. 2 the rotor 9 is also connectable to a toothed wheel 21 as a first part of an encoder 22. The housing 7 further has a cover 23 in which two photocells 25 are arranged at a predetermined reciprocal distance, wherein said two cells 25 forming a second part of said encoder 22. The toothed wheel 21 is to be arranged at a adapted distance from the two photocells 25 detecting the rotation of said toothed wheel 21 connected to the rotor 9. Naturally the encoder 22 can be of different types in order to detect a movement.

The cover 23 has, in this case, an control unit 24 arranged which unit also can, at least partly, be arranged outside said housing 7 for instance by a receiver transmitter device (not shown) in order to achieve operational control. According to the first embodiment the control unit 24 comprises a pulse width modulator 26, PWM shortened form, which for instance is adapted to regulate a current amplitude and a input frequency to the AC-motor 8. A specific input frequency can for instance be adapted to a specific preset current amplitude in order to achieve a controlled level on the output momentum.

The control unit 24 is further adapted to regulate incoming and outgoing signals such as controlling the motor and in turn said door section movement, computing encoder signals and operating a storage capacity for control signals etc.

The function of the drive unit 1 will be described in the following with reference to fig. 1A-1C, fig. 2 and fig. 3. When the AC-motor 8 is adequately supplied with a current amplitude, a voltage and an input frequency controlled by the control unit 24 the motor 8 generally will begin to rotate. The rotor 9 of the motor 8 will transfer the rotational movement to the screw worm 10, the worm wheel 12 and after that to said means for engaging/disengaging 14. If engaged, the rotational movement will affect for instance a wire drum (not shown) with said wire 5 which is directly or indirectly connected to the door section 3, 3', 3". Thus a movement of the door, such as a closing or opening movement, can be achieved.

However, due to several reasons the motor 8 can be exposed to resistance in the transmission 4 such as friction in the transmission lubricant. As a result this can slow down the rotation of the motor. This motor output rotation is detected by the encoder 22 as the toothed wheel 21 is passing throw the photocells 25. The encoded output rotational movement which corresponds to an output frequency can be compared with the input frequency to the motor.

The function of the AC-motor 8 will be described in the following which AC motor 8, according to the first embodiment is normally supplied with a 55 Hz input frequency during ordinary conditions. The level of input frequency has a relationship to the current amplitude. When a slower rotation of the motor 8 is needed the input frequency is reduced. In order to uphold, for instance, a constant output momentum the control unit 24 with the connected modulator 26 can reduce the current amplitude relatively to the reduction of the input frequency, and vice versa. Thus a specific input frequency relatively has a specific current amplitude. The modulator 26 can achieve a regulation in such a way that a preset current amplitude is slightly higher than to the specific current amplitude which is relative to the present specific input frequency.

This relatively higher current amplitude will at an adequate level also achieve an additional effect, a heating effect of the rotor 9. As the rotor 9 is connected to the screw worm 10 which is made of a heat conducting material such as steel, the heat will be transmitted to the screw worm 10 and other adjacent parts of the transmission 4. Consequently an amount of heat can be transmitted to the transmission lubricant having a friction reducing effect on the transmission 4. The rotating parts in the lubricated transmission 4 will further improve the heat distribution during operation.

The method according to the first embodiment will be described in the following, by way of example, describing an opening movement of a building door section during a low temperature condition. A temperature sensor arranged in the drive unit 1 activating the operation of the method when the temperature is below, for instance, +10°C. The control unit 24 initiates a predetermined input frequency to the motor 8 preferably 10-35 Hz more preferred 12-20 Hz and most preferred 13-16Hz. The predetermined input frequency corresponds to a preset current amplitude adjusted by the modulator 26. The modulator can for instance be varied from 0 to 255. The value 170 is an example of a value representing the current amplitude to achieve a high momentum at a 55 Hz input frequency and a wire drum with a diameter of 200 mm. The value 100 is an example of a value representing the current amplitude to achieve a substantially similar high momentum at a 20 Hz input frequency and the wire drum with the diameter of 200 mm.

The occurring output movement of the motor 8 is detected by the encoder 22 via the rotor 9. The corresponding output frequency is compared with the predetermined input frequency. The preset current amplitude will effectuate a thermal effect at the rotor 9 that will heat the transmission lubricant. If an acceptable frequency difference is detected the input frequency will increase, increasing the speed of the motor 8 and in turn the door section 3, 3', 3" . The current amplitude will be adjusted in relation to the increase of the input frequency effectuating a controlled momentum, for instance a constant momentum. If a deviating frequency difference is detected in relation to ordinary conditions a further heating can be required wherein the input frequency with the preset current amplitude is temporarily maintained. The current amplitude is adjusted, in this case by increasing the input frequency as above, when the encoder 22 has detected an acceptable frequency difference. The heating effect of the rotor 9 will decay with the increase of the input frequency, to a normal operational temperature at for instance 55 Hz. Thus a temperature regulation can be achieved throughout the frequency interval.

According to a second embodiment of the invention the method comprising the step of regulating the current amplitude wherein the input frequency is a preset value in relation to the occurring current amplitude which input frequency is variable in the modulator 26 due to the requirement of additional heat for required temperature regulation.

The invention has been described above in the form of various embodiments including some suggestions for alternative embodiments. However, is should be appreciated that it could be modified in a variety of ways without departing from the basic inventive idea. Thus drive unit and the method in accordance with the invention obviously could be applied to doors designed differently from the one shown herein. Further the thermal effect in the rotor 9 could instead be achieved as a thermal effect in a stator of the motor 8 wherein the magnetic field can be adjusted so that the kinetic energy which enables the rotation of the rotor instead at least partly is used as a thermal energy.

## Claims

1. Method for enabling temperature regulation of a transmission lubricant for a motorized building door arrangement having
at least one door section (3,3',3") which is moveable between a closed position and an open position, and vice versa,
an electric motor (8) mechanically connected to a lubricated transmission (4) for achieving a movement of said door section (3, 3' , 3'') and
a control unit (24) adapted to control said motor (8)
comprising the steps of
initiating a predetermined start input frequency and a selectable start current amplitude to said motor (8),
detecting a friction property for determining a present requirement for temperature regulation,
based on said friction property, adjusting said current amplitude effectuating temperature regulation of said transmission lubricant.

2. Method as claimed in claim 1, wherein said input frequency being increased for increasing a movement velocity of said motor (8), when an adequately low friction property is detected.

3. Method as claimed in any one of the claims 1-2, wherein said current amplitude being decreased when an adequately low friction property is detected.

4. Method as claimed in any one of the claims 1-3, further comprising the step of increasing said input frequency for increasing a movement velocity of said motor (8), while maintaining a substantially constant output momentum of a drive unit (1).

5. Method as claimed in any one of the claims 1-4, further comprising the step of decreasing said current amplitude, while maintaining a substantially constant output momentum of a drive unit (1).

6. Method as claimed in any one of the claims 4-5, further comprising the step of maintaining said output momentum substantially constant from said motor (8).

7. Method as claimed in any one of the claims 1-6, wherein said detecting of the friction property is achieved by detecting a motor output frequency of said motor,
determining a frequency difference of said input and said output frequency
based on said frequency difference, adjusting said current amplitude effectuating temperature regulation of said transmission lubricant.

8. Method as claimed in any one of the claims 1-7, using a thermal effect from a rotor (9) of said motor (8) due to said current amplitude for thermal transmittance of said thermal effect to said transmission lubricant.

9. Drive unit (1) for a building door arrangement
having
an electric motor (8) which is mechanically connected to a lubricated transmission (4), said transmission (4) being connectable to at least one building door section (3,3',3") for effectuating a movement thereof, and
a control unit (24) adapted to control said motor and thereby said connectable building door section (3 , 3' , 3'')
**characterised in that** said control unit (24) is adapted to regulate an input frequency and an input current amplitude to said motor (8),
said drive unit comprising
means for detecting (22) a friction property of the transmission lubricant for determining present requirement for temperature regulation,
means for adjusting (24;26) said current amplitude of the motor and means for transmitting a thermal effect caused thereby to said transmission lubricant.

10. Drive unit (1) as claimed in claim 9, wherein said control unit (24) is adapted to adjust said current amplitude and said input frequency to said motor (8), while maintaining a substantially constant output momentum of said motor (8).

11. Drive unit (1) as claimed in any one of the claims 9-10, wherein said means for detecting (22) said friction property is achieved by an encoder (22) adapted to detect a motor output frequency of said motor (8) wherein said control unit (24) is adapted to compare said motor output frequency and said motor input frequency, and a required adjustment of said current amplitude.

12. Drive unit (1) as claimed in any one of the claims 9-11, further comprising a thermal sensor in communication with said control unit (24) to control at least one operational condition of said drive unit (1).

13. Drive unit as claimed in any one of the claims 9-12, further comprising a modulator (26), such as a pulse width modulator (PWM), adapted to adjust said current amplitude and said input frequency to said motor (8) .

14. Drive unit as claimed in any one of the claims 9-13, wherein said means for adjusting (24;26) said current amplitude is adapted to adjust the current amplitude to a sufficient level to effectuate appropriate thermal heating of said transmission lubricant via a rotor (9) of said motor (8).

15. Use of a drive unit (1) arranged in a building door arrangement according to any one of the claims 9-14.
